# FASCICULE DE BREVET EUROPEEN

(11) **EP 3 732 353 B1**
(45) Date de publication et mention de la délivrance du brevet: **04.12.2024**
(21) Numéro de dépôt: 18842634.0
(22) Date de dépôt: 19.12.2018
(51) Int. Cl.: F01D 25/10, F02C 7/275

(54) **PROCÉDÉ DE DÉMARRAGE DE TURBOMACHINE PAR TEMPS FROID ET SYSTÈME DE DÉMARRAGE DE TURBOMACHINE**
VERFAHREN ZUM STARTEN EINES TURBINENTRIEBWERKS IN KALTEM WETTER UND SYSTEM ZUM STARTEN EINES TURBINENTRIEBWERKS
METHOD FOR STARTING A TURBINE ENGINE IN COLD WEATHER AND SYSTEM FOR STARTING A TURBINE ENGINE

(30) Priorité: 29.12.2017 FR 1763361
(43) Date de publication de la demande: 04.11.2020
(73) Titulaire: SAFRAN AIRCRAFT ENGINES, 75015 Paris (FR)
(72) Inventeur: DUPAYS, Clément, 77550 MOISSY-CRAMAYEL (FR); LE PACHE, Gwénolé, Yann, 77550 MOISSY-CRAMAYEL (FR)
(74) Mandataire: Gevers & Orès
(86) Numéro de dépôt international: PCT/FR2018/053394
(87) Numéro de publication internationale: WO 2019/129952

(56) Documents cités:
- WO-A1-2007/102738
- US-A- 5 741 965
- US-A1- 2016 061 061

## Description

### 1. Domaine de l'invention

La présente invention se rapporte au domaine des turbomachines, en particulier d'aéronef. Plus précisément, l'invention concerne un procédé de démarrage de turbomachine par temps froid et un système de démarrage de turbomachine.

### 2. Etat de la technique

L'art antérieur comprend le document US-A1-2016-0061061.

Une turbomachine comprend de manière générale, d'amont en aval, suivant la circulation des gaz dans la turbomachine, un ensemble de compresseur, une chambre de combustion et un ensemble de turbine. L'ensemble de compresseur et de turbine comprennent respectivement au moins un compresseur et au moins une turbine. Le compresseur et la turbine d'un corps de l'ensemble de compresseur et de turbine comprennent chacun un ou plusieurs étages. Un arbre d'entraînement, typiquement l'arbre d'un corps haute pression d'une turbomachine à double corps et double flux, relie un compresseur à une turbine pour entraîner le compresseur. Cet arbre d'entraînement transmet sa puissance via un boîtier d'accessoires à divers accessoires montés sur un boîtier, pour leur fonctionnement. Ces accessoires peuvent être des pompes de carburant et de lubrification, des générateurs électriques, des démarreurs, etc. Les démarreurs et générateurs électriques sont habituellement des accessoires distincts qui ont respectivement pour fonction le démarrage de la turbomachine et la production d'énergie électrique des divers accessoires et équipements. Le démarreur utilisant de l'énergie extérieure, électrique ou pneumatique par exemple, fournit un couple de démarrage destiné à entraîner en rotation l'arbre d'entraînement afin de lui permettre d'atteindre une vitesse de rotation suffisante pour allumer la chambre de combustion via l'air comprimé par le compresseur.

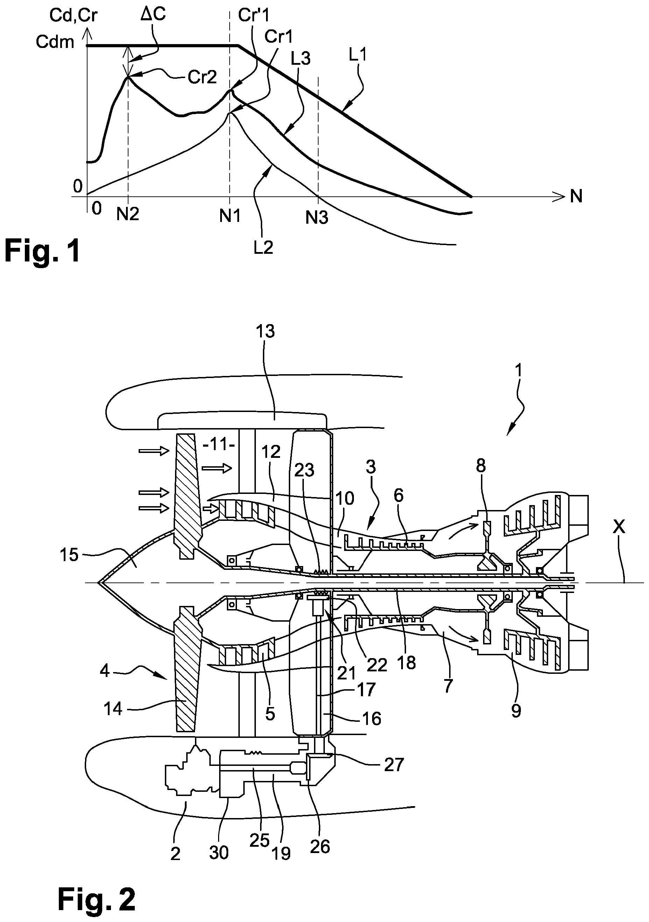

Lors d'un démarrage par des températures extérieures considérées comme « normales », par exemple typiquement des températures supérieures à 10°C, la valeur absolue du couple de démarrage Cd suit généralement une courbe L1 ayant une première phase sous forme de palier et une deuxième phase de descente comme cela est illustré sur la figure 1. La première phase correspond au fait que le démarreur est commandé pour qu'il fournisse un couple de démarrage sensiblement constant Cdm pour lequel il a été dimensionné jusqu'à ce que la vitesse de rotation N de l'arbre d'entraînement atteigne sensiblement une valeur N1 permettant de lancer la phase d'allumage où la chambre de combustion de la turbomachine est allumée. La deuxième phase correspond au fait qu'à partir de la valeur N1, la vitesse de rotation de l'arbre d'entraînement continue d'augmenter jusqu'à ce que la turbomachine atteigne un régime stable de fonctionnement. La courbe L1 de variation du couple de démarrage Cd décroît, par exemple selon une loi linéaire en fonction de la vitesse de rotation de l'arbre d'entraînement qui est adaptée pour accompagner la montée en puissance de la turbomachine jusqu'à ce qu'il fournisse un couple moteur.

A ces températures extérieures « normales », la turbomachine exerce sur l'arbre d'entraînement, avant l'allumage, un couple résistif Cr qui suit la courbe L2 et qui augmente avec la vitesse de rotation N de l'arbre d'entraînement jusqu'à un couple résistif maximum Cr1 lorsque la vitesse de rotation atteint la valeur N1 pour allumer la turbomachine. Le couple résistif Cr diminue régulièrement jusqu'à s'annuler lorsque la vitesse de rotation de l'arbre d'entraînement atteint une valeur N3, puis devient un couple moteur au-delà.

En revanche, par temps froid, c'est-à-dire lorsque la température extérieure est typiquement inférieures à -10°C, et en particulier par temps très froid lorsque la température extérieure est typiquement comprise entre -30°C et -50°C, la turbomachine rencontre des difficultés au démarrage, notamment lorsqu'elle a été immobilisée pendant une période assez importante (plus de vingt-quatre heures par exemple). En effet, les turbomachines résistent généralement très fortement à l'effort développé par le démarreur en début de phase de démarrage. Par exemple, comme illustré sur la figure 1 pour une température extérieure de -40°C, en réponse à une sollicitation du démarreur dont le couple de démarrage Cd suit la courbe L1, le couple résistif Cr suit alors la courbe L3, qui présente un pic de valeur Cr2. Ce pic de valeur Cr2 apparaît lorsque la vitesse de rotation de l'arbre d'entraînement atteint une valeur N2 (faible vitesse) qui est inférieure à la vitesse de rotation N1 correspondant à l'allumage. Quand la vitesse de rotation atteint la valeur N1, le couple résistif atteint une deuxième valeur maximale Cr'1, avant que le couple résistif Cr ne décroisse après l'allumage. En d'autres termes, un pic résistif intervient au début de la séquence de démarrage. D'une manière générale, les valeurs maxima Cr2 et Cr'1 du couple résistif sont plus importantes que la valeur maximale Cr1 atteinte à des températures « normales ».

Ce pic de couple résistif est dû notamment à l'augmentation de la viscosité des lubrifiants retenus dans les roulements du boîtier d'accessoires et dans les paliers de la turbomachine suivant l'arrêt prolongé de la turbomachine et/ou par des températures extérieures froides, typiquement inférieures à -10°C, voire très froides, typiquement inférieures à -30°C. Dans les conditions de températures très froides, la viscosité est très importante ce qui induit des forts phénomènes de frottements visqueux. Le lubrifiant présente des difficultés à circuler au sein de la turbomachine. La viscosité des lubrifiants étant faible à des températures normales, le pic résistif n'est donc pas présent.

Pour pallier ce couple résistif, le démarreur est dimensionné pour que le couple de démarrage Cdm fourni pendant la première phase de la courbe L1 soit supérieur à la valeur maximale Cr2 atteinte par le couple résistif Cr à des températures très froides, la valeur maximale étant augmentée d'une valeur ΔC pour entraîner l'arbre d'entraînement. Cependant, cela implique une augmentation du dimensionnement de la chaîne de démarrage (qui comprend notamment, le démarreur mais aussi des engrenages et l'arbre d'entraînement). Un tel dimensionnement est pénalisant en termes de masse et de volume pour les éléments de la chaîne de démarrage.

Il est connu du document FR-A1-3025252, un procédé permettant de maîtriser le couple exercé par le démarreur en fonction de la vitesse de rotation d'une turbine de la turbomachine de sorte que le démarrage de la turbomachine soit plus robuste quel que soit l'environnement dans lequel celle-ci évolue, en particulier l'environnement de l'aéronef. Cependant, ce procédé ne permet pas d'éviter les couples résistifs, notamment le couple résistif Cr2 à faible vitesse.

Dans le document US-A-5051670, il est décrit un procédé permettant de réguler le couple exercé par le démarreur selon une courbe croissante et décroissante de manière à réduire la consommation électrique du démarreur. Cependant, ce procédé ne permet pas non plus d'éviter les couples résistifs, notamment le couple résistif Cr2 à faible vitesse.

Dans tous les cas susmentionnés, la rotation de l'arbre d'entraînement dans un même sens conduit à devoir augmenter exagérément le couple appliqué pour réaliser à la fois l'évacuation et l'échauffement du lubrifiant. Cela entraîne également une augmentation des sollicitations en fatigue sur toute la chaîne de transmission.

Il est également connu la mise en oeuvre d'échangeur de chaleur permettant de réchauffer les lubrifiants et de réduire la viscosité. Toutefois, il s'agit d'un ou de plusieurs organes supplémentaires qui influent sur les dimensions et la masse de la turbomachine.

### 3. Objectif de l'invention

Le présent déposant s'est donc fixé notamment comme objectif de fournir une solution permettant de faciliter le démarrage de la turbomachine notamment à des températures extérieures très froides tout en évitant une augmentation de la masse de la turbomachine.

### 4. Exposé de l'invention

On parvient à cet objectif conformément à l'invention grâce à un procédé de démarrage par temps froid d'une turbomachine comportant un système de démarrage destiné à entraîner en rotation un arbre d'entraînement de la turbomachine, le procédé comprenant les étapes suivantes :
- une étape de prédémarrage dans laquelle un premier signal de démarrage est généré pour commander l'arbre d'entraînement dans un premier sens de rotation autour d'un un axe longitudinal et dans un deuxième sens de rotation opposé de manière alternée de sorte à générer des oscillations, et
- une étape de démarrage dans laquelle un second signal de démarrage est transmis au système de démarrage pour que celui-ci entraîne l'arbre d'entraînement de la turbomachine dans un sens de rotation normal et dans lequel l'arbre d'entraînement est entraîné en rotation jusqu'à une vitesse de rotation générant le démarrage de la turbomachine.

Ainsi, cette solution permet d'atteindre l'objectif susmentionné. En particulier, l'entraînement en rotation de l'arbre d'entraînement dans un sens puis dans un autre, de manière alternée, génère des oscillations, voire des micro-oscillations qui permettent de réchauffer suffisamment le lubrifiant contenu dans les éléments roulants, les roues d'engrenage et/ou palier de la turbomachine. Le réchauffement du lubrifiant entraîne donc une réduction de la viscosité du lubrifiant qui peut alors s'évacuer des éléments roulants. La viscosité du lubrifiant étant réduite, le couple résistif apparaissant généralement par temps très froid est diminué voire supprimé. Un tel mode de fonctionnement permet d'éviter le surdimensionnement du système de démarrage, en particulier du démarreur, et/ou de la turbomachine qui influe sur sa masse et sa traînée.

Suivant une caractéristique de l'invention, l'arbre d'entraînement est l'arbre d'un corps haute pression de la turbomachine qui est à double corps et double flux.

Suivant une autre caractéristique de l'invention, l'arbre d'entraînement est couplé à un boîtier d'accessoires comprenant un lubrifiant dont la viscosité augmente à basse température, en particulier à une température inférieure à -10°C et plus particulièrement inférieure à -30°C. Les accessoires du boîtier peuvent être entraînés en rotation suivant les premier et deuxième sens de rotation de manière alternée. Si un accessoire ne supporte qu'un seul sens de rotation, il peut être couplé au boîtier d'accessoires par un système de débrayage ou de roue libre. Le sens de rotation alterné permet de faciliter le démarrage de la turbomachine, puisque les oscillations de l'arbre d'entrainement dans les deux sens vont permettre le réchauffage et l'évacuation du lubrifiant visqueux contenu dans les paliers de l'arbre d'entraînement, et les oscillations des éléments du boîtier d'accessoires vont permettre le réchauffage et l'évacuation du lubrifiant visqueux contenu dans les éléments roulants et roues d'engrenage de celui-ci.

Suivant une caractéristique de l'invention, l'étape de prédémarrage est effectuée pendant une durée totale déterminée.

Suivant encore une autre caractéristique, l'étape de prédémarrage est effectuée à une vitesse de rotation de prédémarrage prédéterminée de l'arbre d'entraînement.

Suivant une autre caractéristique de l'invention, la durée totale déterminée et/ou la vitesse de rotation de prédémarrage de l'étape de prédémarrage est/sont déterminée(s) en fonction de la température du lubrifiant au voisinage du boîtier d'accessoires, d'un couple résistif exercé par la turbomachine ou de la température extérieure à la turbomachine.

Suivant un mode de réalisation de l'invention, le procédé comprend une étape de détermination d'une température de lubrifiant dans laquelle un signal indicateur de température en réponse à une température de lubrifiant mesurée au voisinage du boitier d'accessoires ou dans celui-ci est comparée à une valeur seuil de température de lubrifiant, de sorte que lorsque la température mesurée est supérieure à la valeur de température seuil, le second signal de démarrage est généré pour commander l'arbre d'entraînement de la turbomachine dans un sens de rotation normal. Cette étape permet de vérifier que le lubrifiant a atteint une température suffisante par échauffement et qu'une véritable séquence de démarrage peut être commandée. Cela permet également de déterminer au moins la durée de l'étape de prédémarrage.

Suivant un autre mode de réalisation de l'invention, le procédé comprend une étape de détermination d'un couple résistif exercé par la turbomachine dans laquelle un signal indicateur de couple en réponse au couple résistif mesuré est comparée à une valeur de couple seuil pour une vitesse de rotation donnée de la turbomachine de sorte que lorsque le couple résistif mesuré devient inférieur ou égal à la valeur de couple seuil, le second signal de démarrage est généré pour commander l'arbre d'entraînement de la turbomachine dans un sens de rotation normal. De même, cette étape permet de vérifier l'état du lubrifiant dans les éléments roulants et/ou roues d'engrenage en fonction du couple exercé par la turbomachine et de déterminer au moins la durée de l'étape de prédémarrage.

En fonction du couple résistif mesuré, il est donc possible de savoir si le lubrifiant dans le boîtier d'accessoires est devenu moins visqueux, et dans ce cas en déduire que ce couple résistif exercé par la turbomachine dans la phase de démarrage à des températures très froides restera inférieur à un seuil susceptible d'empêcher le démarrage de la turbomachine. La phase de démarrage de la turbomachine peut dont être lancée, ou dans le cas contraire la phase de prédémarrage sera maintenue pour continuer l'échauffement du lubrifiant au sein du boîtier d'accessoires.

Suivant une caractéristique de l'invention, le second signal de démarrage est généré après une durée d'attente prédéterminée qui suit l'achèvement de l'étape de prédémarrage, la vitesse de l'arbre d'entraînement étant nulle lorsque l'étape de démarrage est enclenchée.

Suivant encore une autre caractéristique de l'invention, la vitesse de rotation de prédémarrage maximale de l'arbre d'entraînement atteinte pendant le prédémarrage est inférieure à la vitesse de rotation générant le démarrage de la turbomachine.

Avantageusement, mais non limitativement, la vitesse de rotation de prédémarrage maximale pendant le prédémarrage est comprise entre 100 tours/min et 1000 tours/min. Une telle vitesse ne permet pas le démarrage de la turbomachine et évite le surdimensionnement du système de démarrage.

Suivant encore une autre caractéristique de l'invention, la durée de l'étape de prédémarrage est prédéterminée et comprise entre 10s et 300s.

Suivant une autre caractéristique de l'invention, l'étape de détermination d'une température de lubrifiant est effectuée avant ou après l'étape d'émission du premier signal de démarrage.

Suivant un mode de réalisation, le procédé comprend une étape de détermination d'une température extérieure dans laquelle un signal indicateur de température extérieure en réponse à une température mesurée est comparé à une valeur de température seuil de sorte que, lorsque la température extérieure mesurée est égale ou inférieure à la valeur de température seuil, le premier signal de démarrage est généré.

De manière avantageuse, mais non limitativement, le premier signal et le second signal de démarrage sont appliqués à un démarreur couplé à l'arbre d'entraînement de la turbomachine.

L'invention concerne également un système de démarrage d'une turbomachine, le système comportant un module de commande électronique, un démarreur destiné à être commandé par le module de commande électronique et un arbre d'entraînement de la turbomachine couplé au démarreur, le module de commande électronique étant agencé pour générer un premier signal destiné à commander la rotation de l'arbre d'entraînement dans un premier sens de rotation suivant un axe longitudinal et dans un deuxième sens de rotation opposé, de manière alternée de sorte à générer des oscillations, et pour générer un second signal destiné à commander la rotation de l'arbre d'entraînement dans un sens de rotation normal dans lequel l'arbre d'entraînement est entraîné en rotation jusqu'à une vitesse de rotation générant le démarrage de la turbomachine. Ainsi, un tel système permet de faire osciller, via l'arbre d'entraînement, le boîtier d'accessoires de manière à réchauffer le lubrifiant contenu dans les éléments roulants du boîtier d'accessoires et à réduire sa viscosité. La viscosité étant réduite, le pic résistif prévu au démarrage de la turbomachine sera réduit voire supprimé.

Suivant une caractéristique du système, l'arbre d'entraînement est couplé à un boitier d'accessoires sur lequel est monté le démarreur, ce dernier étant apte à actionner l'arbre d'entraînement dans les premier et deuxième sens de rotation opposés de manière alternée.

Suivant une caractéristique de l'invention, le système de démarrage comprend un moyen de détection de température qui est relié au module de commande électronique et est configuré de manière à fournir un signal indicateur de température du lubrifiant au voisinage d'un boîtier d'accessoires de la turbomachine.

Suivant une caractéristique de l'invention, le système de démarrage comprend des moyens de détermination de couple reliés au module de commande électronique et configurés pour fournir un signal indicateur de couple exercé par la turbomachine.

De manière avantageuse, mais non limitativement, le système de démarrage comprend un moyen de détermination de déplacement angulaire de manière à déterminer le sens de rotation et la vitesse de rotation de l'arbre d'entraînement de la turbomachine, le moyen de détermination étant relié au module de commande électronique.

Suivant une caractéristique de l'invention, le démarreur comprend un démarreur électrique, par exemple un démarreur-générateur.

### 5. Brève description des figures

L'invention sera mieux comprise, et d'autres buts, détails, caractéristiques et avantages de celle-ci apparaîtront plus clairement à la lecture de la description explicative détaillée qui va suivre, d'un mode de réalisation de l'invention donné à titre d'exemple purement illustratif et non limitatif, en référence aux dessins schématiques annexés dans lesquels :
La figure 1 présente des évolutions de couples exercés par le système de démarrage et la turbomachine sur un arbre d'entraînement lors d'une phase de démarrage effectuée selon l'art antérieur ;
La figure 2 est une vue en coupe axiale d'un exemple de turbomachine à laquelle s'applique l'invention ; et,
La figure 3 est une représentation schématique de certains organes du système de démarrage de la turbomachine et de la turbomachine selon l'invention.

### 6. Description de modes de réalisation de l'invention

La figure 2 montre une vue en coupe axiale d'une turbomachine d'axe longitudinal X, et en particulier, une turbomachine double flux selon l'invention. Bien entendu, l'invention n'est pas limitée à ce type de turbomachine. Cette turbomachine 1 comprend de manière générale une nacelle 2 enveloppant un générateur de gaz 3 d'axe longitudinal X en amont duquel est montée une soufflante 3. Dans la présente invention, et de manière générale, les termes « amont » et « aval » sont définis par rapport à la circulation des gaz dans la turbomachine 1, et sensiblement suivant l'axe longitudinal X. Le générateur de gaz 3 comprend d'amont en aval un compresseur basse pression 5, un compresseur haute pression 6, une chambre de combustion 7, une turbine haute pression 8 et une turbine basse pression 9. La turbomachine 1 comprend une veine primaire 10 dans laquelle circule un flux primaire qui traverse le générateur de gaz 3. Celle-ci comprend également une veine secondaire 11 dans laquelle circule un flux secondaire entre la nacelle 2 et un carter, ici un carter intermédiaire 12 entourant le générateur de gaz 3. Un carter de soufflante 13 qui est solidaire de la nacelle 2, délimite des aubes de soufflantes 14 qui s'étendent radialement depuis un moyeu 15. Le terme « radial » est défini par rapport à un axe radial perpendiculaire à l'axe longitudinal X de la turbomachine.

Un bras de carter 16 s'étend radialement entre le carter intermédiaire 12 et la nacelle 2 et est sensiblement tubulaire. Le bras de carter 16 est traversé radialement par un arbre radial d'entrée 17. Ce dernier est connecté à un arbre d'entraînement 18 de la turbomachine coaxial à l'axe longitudinal X. En particulier, l'arbre radial d'entrée 17 assure une transmission de puissance entre l'arbre d'entrainement 18 et un boîtier d'accessoires 19 ou relais d'accessoires connue sous la désignation anglaise de « Accessory GearBox » (siglée AGB). En d'autres termes, l'arbre d'entraînement 18 entraîne en rotation les organes du boîtier d'accessoires 19 lorsque celui-ci est en rotation. A cet effet, un premier mécanisme de transmission de puissance 21 est agencé entre l'arbre radial d'entrée 17 et l'arbre d'entraînement 18. Le premier mécanisme de transmission de puissance 21 comprend un premier pignon 22 solidaire de l'arbre radial d'entrée 17. Le premier mécanisme 21 comprend également un second pignon 23 solidaire de l'arbre d'entraînement 18. Le premier pignon 22 engrène avec le second pignon 23. Suivant un exemple de réalisation, les premier et deuxième pignons 22, 23 sont coniques de manière à former un renvoi d'angle entre l'arbre radial d'entrée 17 et l'arbre d'entraînement 18. Un deuxième mécanisme de transmission 24 de puissance est agencé entre l'arbre radial d'entrée 17 et l'arbre d'entraînement 18. Le deuxième mécanisme de transmission de puissance 24 comprend un troisième pignon 26 et un quatrième pignon 27. Le troisième pignon 26 est solidaire ici d'un arbre principal 25 connecté au boîtier d'accessoires 19. L'arbre principal 25 est sensiblement parallèle à l'axe longitudinal X. Quant au quatrième pignon 27, celui-ci est solidaire de l'arbre radial d'entrée 17. Le quatrième pignon 27 est opposé suivant l'axe radial au premier pignon 22. De manière avantageuse, les troisième et quatrième pignons 26, 27 sont coniques de manière à former un renvoi d'angle entre l'arbre principal 25 et l'arbre radial d'entrée 17. Ici, l'arbre d'entraînement 18 est l'arbre haute pression qui relie le compresseur haute pression 6 et la turbine haute pression 8 de manière à former un corps haute pression.

Le boîtier d'accessoires 19 comprend plusieurs roues d'engrenage montées en série. En particulier, des premières roues dentées sont solidaires de l'arbre principal 25 du boîtier d'accessoires 19. Chaque première roue dentée engrène avec une deuxième roue dentée connectée à un accessoire ou équipement de la turbomachine via un arbre secondaire. L'arbre principal 25, les premières et deuxièmes roues dentées et les arbres secondaires sont logés dans un carter 30 du boîtier d'accessoires. Ces accessoires couplés au boîtier 19 comprennent par exemple, comme nous l'avons vu en préambule, un démarreur 20, des pompes 29 de carburant, de lubrification, hydraulique, un déshuileur (non représenté), un générateur électrique (non représenté), etc. Le démarreur 20 permet de démarrer la turbomachine 1 et de générer une énergie électrique après le démarrage via les premier et deuxième mécanismes 21, 24. En particulier, le démarreur 20 entraîne en rotation l'arbre haute pression 18.

Le boitier d'accessoires 19 est installé dans la nacelle 2 comme cela est illustré sur la figure 2. De la sorte, le boîtier d'accessoires 19 est monté à l'extérieur de la veine secondaire 11. Le démarreur 20 est monté sur le boîtier d'accessoires 19, il est donc apte à entraîner l'arbre haute pression 18 par l'intermédiaire du boitier d'accessoires 19 et de l'arbre radial d'entrée 17.

En alternative, de façon connue en soi, il est possible d'accoupler le démarreur 20 à l'arbre haute pression 18 sans passer par le boîtier d'accessoires 19. Dans cette alternative, le démarreur 20 entraîne l'arbre haute pression 18 sans que le boitier d'accessoires 19 ne participe à la transmission. Dans cette même alternative, le boîtier d'accessoires 19 est alors entraîné par le démarreur 20 par l'intermédiaire de l'arbre haute pression.

La turbomachine comprend également un circuit d'huile pour lubrifier des éléments roulants tels que des paliers 31 montés sur l'arbre haute-pression 18, des pignons et roues dentées et/ou des roulements des arbres secondaires dans le boîtier d'accessoires 19.

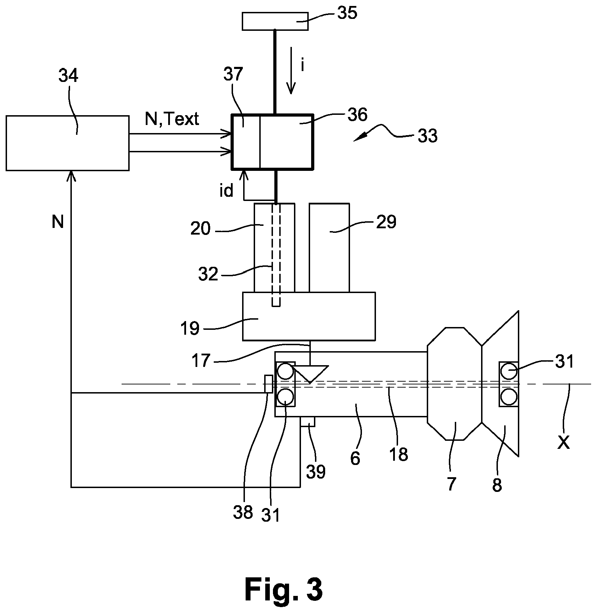

En référence à la figure 3, le démarreur 20 fait partie d'un système de démarrage de la turbomachine pour entraîner l'arbre haute-pression 18 jusqu'à une vitesse de rotation générant le démarrage de la turbomachine. Dans le cadre de cet exemple, l'arbre haute pression 18 est entraîné en rotation depuis une première vitesse V0 qui peut être nulle, correspondant à l'arrêt de la turbomachine, ou qui peut être relativement faible dans le sens de rotation normal, jusqu'à une deuxième vitesse de rotation V2 permettant à la turbomachine de fonctionner de manière autonome. Nous entendons dans la présente invention par l'expression « sens de rotation normal », le sens permettant le fonctionnement de la turbomachine pour générer une poussée. La deuxième vitesse de rotation V2 correspond au régime de rotation N1 susmentionné en référence à la figure 1, qui permet le démarrage de la turbomachine et en particulier l'allumage de la chambre de combustion 7.

Pour cela, le démarreur 20 comprend un arbre de sortie 32 qui est couplé au boitier d'accessoires 19 pour délivrer un couple de démarrage à l'arbre haute pression 18. Le système de démarrage comprend un module de commande électronique 33 (appelé SCU) qui est destiné à commander le démarreur 20. Ce module de commande électronique 33 communique avec une unité électronique 34 de la turbomachine. L'unité électronique 34 peut être un calculateur (appelé ECU en anglais pour « Electronic Control Unit »). Le module de commande 33 reçoit de l'unité électronique des indications de la vitesse de rotation de l'arbre haute pression 18, de mesures de température, et des signaux de démarrage comme décrit ci-après. Le module de commande 33 reçoit directement, en outre, une intensité de courant Id mesurée dans le démarreur 20. Dans le présent exemple, le démarreur 20 est un démarreur électrique et est alimenté par une source d'alimentation électrique. Cette dernière peut être une batterie, une alimentation externe de type prise de parc électrique, ou le réseau de bord de l'aéronef. Le démarreur électrique est une machine synchrone tri-étage. D'autres technologies sont possibles telles qu'une machine asynchrone, une machine synchrone à aimant permanent, à courant continu. Le principe de fonctionnement est similaire pour le contrôle en couple.

De manière alternative, le démarreur est un démarreur-générateur relié à l'arbre haute pression et pouvant fonctionner en mode générateur à l'issu de la phase de démarrage. Avantageusement, mais non limitativement, le démarreur-générateur est à fréquence variable connue sous la désignation anglaise « Variable Frequency Starter Generator » (siglée VFSG).

Dans la suite de la présente invention, le démarreur est considéré comme étant un démarreur électrique, par exemple un démarreur-générateur.

Le module de commande 33 est également relié à un circuit électrique 35 de l'aéronef sur lequel est embarquée la turbomachine et qui est couplé à la source d'alimentation électrique. Le circuit électrique 35 transfère une puissance électrique i qui est délivrée au démarreur 20 via un dispositif de transfert de puissance 36 que comprend le module de commande 33. Le module de commande 33 comprend en outre un dispositif de commande 37 qui commande le dispositif de transfert de puissance 36 en fonction du couple de démarrage à exercer. Il peut être envisagé d'inclure ce dispositif de commande 37 dans l'unité électronique 34. Le module de commande 33 commande alors le couple développé par le démarreur 20 en régulant la puissance électrique i qui est transmise au démarreur 20. Le boîtier d'accessoires 19 participe donc au démarrage de la turbomachine en transformant le couple exercé sur l'arbre de sortie 32 du démarreur en un couple de démarrage exercé sur l'arbre haute-pression 18. Une fois que l'arbre haute pression 18 atteint la deuxième vitesse V2 correspondant au fait que la turbomachine a démarré, l'énergie de rotation de l'arbre haute pression 18 est distribuée aux autres accessoires essentiels pour le fonctionnement de la turbomachine et de l'aéronef via l'arbre radial d'entrée 17 et les premier et deuxième mécanismes 21, 24.

Nous allons maintenant décrire le procédé de démarrage de la turbomachine au moyen du système de démarrage. Le procédé de démarrage comprend une étape de prédémarrage préalablement à une étape de démarrage classique de la turbomachine où l'arbre d'entraînement, ici l'arbre haute pression 18, est entraîné en rotation depuis la première vitesse de rotation nulle à la deuxième vitesse de rotation générant le démarrage de la turbomachine.

En particulier, dans l'étape de prédémarrage, un premier signal de démarrage est généré pour commander l'entraînement de l'arbre haute pression 18 dans un premier sens de rotation, puis dans un deuxième sens de rotation opposé autour de l'axe longitudinal X, et cette opération est répétée de manière alternée. Dans une deuxième étape de démarrage, un second signal de démarrage est ensuite généré pour commander l'arbre haute pression de la turbomachine dans un sens de rotation normal jusqu'à la deuxième vitesse de rotation V2 générant le démarrage de la turbomachine comme nous le verrons dans la suite de la description.

Le premier signal de démarrage est généré par le module de commande 33 et est transmis au démarreur 20 entraînant l'arbre haute pression 18 dans les premier et deuxième sens de rotation de manière alternée. En d'autres termes, l'arbre haute pression 18 est commandé de manière à faire des « allers-retours » angulaires autour de l'axe longitudinal de la turbomachine pour réaliser plusieurs oscillations. Nous entendons dans la présente invention par le terme « oscillation » des mouvements de rotation dans des sens horaire et antihoraire autour de l'axe longitudinal de la turbomachine.

L'entraînement en rotation de l'arbre haute pression 18 génère l'entraînement en rotation des accessoires couplés au boîtier d'accessoires 19 relié à celui-ci, via l'arbre radial d'entrée 17, dans les premier et deuxième sens de rotation de manière alternée.

Cette séquence de rotations alternées permet de réchauffer suffisamment le lubrifiant contenu et emprisonné dans les roulements du boîtier d'accessoires, par frottement visqueux, de sorte à réduire sa viscosité. En effet, par des oscillations du couple appliqué par le démarreur 20 au lancement de la séquence de prédémarrage, qui provoquent de petites amplitudes de rotations alternées de l'arbre haute pression 18, il est possible de réaliser localement un échauffement du lubrifiant sans forcer sur le couple. Les oscillations du couple viennent successivement compresser et décompresser le lubrifiant figé, en augmentant progressivement l'amplitude d'oscillation, ce qui réchauffe le lubrifiant sans le faire circuler significativement et sans le forcer dans une même direction.

Il n'y a donc pas de risque d'une accumulation de lubrifiant visqueux dans une même zone du boîtier d'accessoires contrairement à un procédé connu dans lequel en appliquant un couple particulièrement fort dans une seule direction, les roulements du boîtier d'accessoires sont forcés à tourner toujours dans le même sens. Avec un tel procédé connu, la demanderesse a pu étudier que le couple de rotation appliqué dans un seul sens a pour effet de forcer du lubrifiant encore visqueuse à être évacuée des roulements vers une même zone du boîtier d'accessoires qui peut se trouver en interaction avec des éléments tournants (paliers, pignons, arbres,...), provoquant ainsi le risque d'augmenter substantiellement le couple résistif à froid de ces éléments tournants. D'autre part, le fait de particulièrement forcer sur le couple pour évacuer du lubrifiant encore visqueux présente le risque d'endommager des composants internes du boîtier d'accessoires, y compris ses roulements.

Avec le procédé de démarrage selon l'invention, le lubrifiant peut être suffisamment réchauffé par frottement visqueux, de sorte à ce que sa viscosité soit significativement réduite quand il est évacué des roulements. De plus, les oscillations du couple appliqué par le démarreur 20, lors de la séquence de prédémarrage, sont effectuées sans forcer sur le couple appliqué au boîtier d'accessoires dont les composants internes évitent ainsi d'être endommagés. Par ailleurs, les oscillations de l'arbre haute pression 18 vont également permettre de réchauffer et d'évacuer le lubrifiant présent dans les paliers 30 de l'arbre 18, et ainsi de faciliter le démarrage de la turbomachine.

Le système de démarrage 20 comprend également un moyen de détermination 38 de déplacement angulaire destiné à identifier le sens de rotation et la vitesse de rotation de l'arbre haute pression 18. Le moyen de détermination 38 est relié à l'unité électronique 34. Le moyen de détermination de déplacement angulaire comprend ici un capteur par exemple de type résolveur.

Pour entraîner l'arbre haute pression 18 dans le premier sens de rotation, le démarreur 20 applique un premier couple, qui peut être qualifié de couple de prédémarrage, à l'arbre haute pression 18 pendant une première durée prédéterminée. Puis le démarreur 20 applique un second couple de prédémarrage à l'arbre haute pression 18 pour l'entraîner dans le deuxième sens de rotation opposé pendant une deuxième durée prédéterminée. Cela permet de réchauffer localement le lubrifiant figé dans la turbomachine. Le capteur 38 transmet un signal indicateur du sens de rotation de la turbomachine à l'unité électronique avant que le démarreur 20 n'applique les couples de prédémarrage à l'arbre haute puissance de la turbomachine. La première et la deuxième durée prédéterminées sont comprises par exemple respectivement entre 1s et 10s, mais en alternative des durées beaucoup plus courtes peuvent être prévues de façon à générer des micro oscillations.

Lors de l'entraînement en rotation de l'arbre haute pression 18 dans les premier et deuxième sens de rotation, celui-ci oscille suivant une amplitude angulaire pouvant être comprise entre -45° et +45° par rapport à une position de référence de la turbomachine. Dans cet exemple, la position de référence correspond à la position de repos de la turbomachine dans laquelle nous considérons un point situé dans un plan radial perpendiculaire à l'axe longitudinal de la turbomachine. L'amplitude angulaire peut augmenter progressivement pendant la durée totale de l'étape de prédémarrage pour atteindre par exemple des valeurs comprises entre -90° et +90° par rapport à la position de référence. L'augmentation de l'amplitude angulaire peut être provoquée par une augmentation progressive de la valeur respective des premier et deuxième couples de démarrage appliquée à l'arbre haute pression 18 et/ou de la durée d'application du couple dans chaque sens.

Suivant un mode de réalisation de l'invention, le procédé comprend une étape de détermination de la température extérieure dans laquelle lorsqu'un signal indicateur de la température extérieure Text de la turbomachine est inférieure ou égale à une valeur de température seuil Tseuil, le premier signal de démarrage est généré pour entraîner l'arbre haute pression 18 suivant les premier et deuxième sens de rotation pour osciller. De la sorte, l'étape de prédémarrage n'est pas appliquée systématiquement. Cette valeur de température seuil est déterminée lors des phases de développement de la turbomachine et est stockée dans une mémoire de l'unité électronique 34 ou du dispositif de commande 37. La turbomachine comprend un capteur de température extérieure 39 qui est relié à l'unité électronique 34. Ce dernier reçoit un signal indicateur de température extérieure mesurée en réponse à la température mesurée par le capteur de température et la compare à la valeur de température seuil Tseuil. Cette valeur de température seuil peut être de l'ordre de -30°C.

L'étape de prédémarrage est effectuée pendant une durée totale déterminée et/ou avec une vitesse de rotation de prédémarrage prédéterminée. La durée totale déterminée des oscillations peut être assez courte. De manière avantageuse, mais non limitativement, la durée totale déterminée DT est comprise entre 10s et 300s. De même, lors de l'étape de prédémarrage, la vitesse de rotation de prédémarrage maximale atteinte par l'arbre haute pression 18 peut être comprise par exemple entre 100 tours/min et 1000 tours/min.

De manière avantageuse, mais non limitation, la durée totale déterminée des oscillations et/ou la vitesse de rotation de prédémarrage est/sont déterminée(s) en fonction de la température extérieure Text à la turbomachine. Il est possible, par exemple, lors de la phase de développement de la turbomachine, de définir pour chaque valeur de température extérieure Text dans laquelle la turbomachine doit fonctionner, une durée totale et/ou une vitesse de rotation de prédémarrage pour entraîner l'arbre haute pression 18 en rotation. Les durées totales et/ou les vitesses de rotation de prédémarrage peuvent être stockées sous forme de tables. En fonction de la valeur de la température extérieure Text mesurée, le module de commande 33 applique la durée totale déterminée et/ou la vitesse de rotation V de prédémarrage pour l'arbre haute pression 18.

De manière avantageuse, mais non limitativement, la durée totale déterminée et/ou la vitesse de rotation de prédémarrage peut(vent) être également déterminée(s) en fonction de la température du lubrifiant au voisinage du boîtier d'accessoires 19. A cet effet, le procédé comprend une étape de détermination d'une température de lubrifiant dans laquelle une température du lubrifiant est mesurée au voisinage du boîtier d'accessoires 19. Un signal indicateur de la température de lubrifiant en réponse à la température Tlub mesurée est transmis à l'unité électronique 34. Ce signal indicateur de la température Tlub mesurée est comparé à une valeur de température de lubrifiant Tlubseuil. Lorsque la température de mesurée est supérieure à la valeur de température de lubrifiant seuil, le second signal de démarrage de la turbomachine est généré.

Le second signal de démarrage est également généré par le module de commande 33 et est transmis au démarreur 20 entraînant l'arbre haute pression 18 dans son sens de rotation normal. Ce second signal de démarrage peut être précédé d'un signal d'arrêt des oscillations transmis au démarreur 20. La température du lubrifiant est mesurée au moyen d'un capteur de température de lubrifiant (non représenté). Ce dernier est placé avantageusement, mais non limitativement, dans le boitier d'accessoires 19 et est également relié à l'unité électronique 34. Lorsque la température mesurée est inférieure ou égale à la valeur de température seuil, l'unité électronique 34 émet un signal de commande de maintien de l'étape de prédémarrage.

La durée totale déterminée et/ou la vitesse de rotation de prédémarrage peut(vent) être également déterminée(s) en fonction d'un couple résistif exercé par la turbomachine. Pour cela, le procédé comprend une étape de détermination du couple résistif exercé par la turbomachine. Un signal indicateur du couple en réponse au couple CM mesuré est transmis à l'unité électronique 34. Ce signal indicateur de couple est comparé à une valeur de couple seuil Cseuil pour une vitesse de rotation donnée. Tant que le couple résistif mesuré est supérieur à la valeur de couple seuil, cela signifie que la viscosité du lubrifiant n'est pas suffisamment réduite pour permettre le démarrage, l'étape de prédémarrage est donc maintenue. Pour ceci, il peut être prévu que l'unité électronique transmette un signal de commande au module de commande 33 pour le maintien de l'étape de prédémarrage. Lorsque le couple résistif mesuré devient égal ou inférieur à la valeur de couple seuil, le second signal de démarrage est généré pour commander l'arbre d'entraînement de la turbomachine dans un sens de rotation normal. Pour ceci, le module de commande 33 transmet au démarreur 20 le second signal de démarrage de la turbomachine. Comme précédemment, ce second signal de démarrage peut être précédé d'un signal de commande d'arrêt de l'étape de prédémarrage. La détermination du couple exercé par la turbomachine permet de déterminer la viscosité du lubrifiant dans le boîtier d'accessoires 19. En d'autres termes, avec des couples faibles, la viscosité du lubrifiant est réduite ce qui implique que le lubrifiant est réchauffé. Différentes valeurs de couples pour différentes vitesses de rotation de l'arbre haute pression sont stockées dans la mémoire de l'unité électronique 34 ou dans le dispositif de commande 37.

Dans l'étape de démarrage, le second signal de démarrage est transmis au démarreur 20 pour que celui-ci entraîne l'arbre haute pression 18 de la turbomachine dans un sens de rotation normal de démarrage et dans lequel l'arbre haute pression 18 est entraîné en rotation depuis la première vitesse V0 pouvant être nulle jusqu'à la deuxième vitesse de rotation V2 générant le démarrage de la turbomachine. Nous comprenons alors que la vitesse de rotation de prédémarrage de l'arbre d'entraînement pendant l'étape de prédémarrage est inférieure à celle de l'arbre d'entraînement pendant l'étape de démarrage. L'arbre d'entraînement, dans l'étape de démarrage, ne peut entraîner le démarrage de la turbomachine pour éviter le couple résistif.

Ce second signal de démarrage peut être émis suite à un ordre de démarrage du pilote à l'unité électronique 34. En particulier, l'unité électronique 34 peut émettre, à l'issue du signal de commande d'arrêt de l'étape de prédémarrage, un signal d'information au pilote correspondant à un état de viscosité du lubrifiant dans le boîtier d'accessoires 19 ou de la température extérieure pour que celui-ci décide de procéder au démarrage de la turbomachine de lui-même. Cette information peut se présenter sous la forme d'une information visuelle ou sonore. L'état de viscosité du lubrifiant est obtenu suite à l'étape de détermination de la température de lubrifiant dans le boîtier d'accessoires. L'étape de détermination de température du lubrifiant au voisinage du boitier d'accessoires peut être réalisée avant l'étape de prédémarrage.

De manière avantageuse, le lubrifiant comprend une huile pouvant lubrifier et refroidir des organes de la turbomachine.

Dans un mode de réalisation, le procédé comprend une étape d'attente dans laquelle le second signal de démarrage est généré après une durée d'attente. Pendant cette étape, un signal indicateur du sens de rotation ou de l'arrêt de la rotation de l'arbre haute pression 18 peut être transmis à l'unité électronique 34 afin de vérifier que le démarreur 20 est prêt à entraîner l'arbre haute pression 18 dans le sens normal de rotation.

Lors de l'étape de démarrage, le démarreur applique un couple de démarrage à l'arbre haute pression 18. La deuxième vitesse de rotation permet d'allumer la chambre de combustion alimentée en air comprimé par le compresseur. L'arbre haute pression 18 subit une accélération continue jusqu'à ce que celui-ci atteigne la vitesse V2.

Dans le mode de réalisation décrit en référence à la figure 2, le boîtier d'accessoires 19 est situé dans la nacelle. Le procédé de démarrage selon l'invention s'applique également à des architectures de turbomachine ayant d'autres dispositions d'un ou plusieurs boîtiers d'accessoires, par exemple une architecture telle que décrite dans la publication FR2981986A1, dans laquelle le boîtier d'accessoires est situé dans un compartiment inter-veines d'une turbomachine à double flux.

## Revendications

1. Procédé de démarrage par temps froid d'une turbomachine où la température extérieure est inférieure à -10°C, voire inférieure à -30°C, la turbomachine comportant un système de démarrage destiné à entraîner en rotation un arbre d'entraînement (18) de la turbomachine (100), le procédé comprenant les étapes suivantes :
- une étape de prédémarrage dans laquelle un premier signal de démarrage est généré pour commander l'arbre d'entraînement (18) dans un premier sens de rotation autour d'un axe longitudinal (X) et dans un deuxième sens de rotation opposé de manière alternée de sorte à générer des oscillations, et
- une étape de démarrage dans laquelle un second signal de démarrage est généré pour commander l'arbre d'entraînement (18) de la turbomachine dans un sens de rotation normal correspondant à l'un des premier et deuxième sens de rotation et dans lequel l'arbre d'entraînement (18) est entraîné en rotation jusqu'à une vitesse (V2) de rotation générant le démarrage de la turbomachine.

2. Procédé selon la revendication précédente, **caractérisé en ce que** l'arbre d'entraînement (18) est l'arbre d'un corps haute pression de la turbomachine qui est à double corps et double flux.

3. Procédé selon l'une quelconque des revendications précédentes, **caractérisé en ce que** l'arbre d'entraînement (18) est couplé à un boitier d'accessoires (19) comprenant un lubrifiant dont la viscosité augmente à basse température, en particulier à une température inférieure à -10°C et plus particulièrement inférieure à -30°C.

4. Procédé selon l'une quelconque des revendications précédentes, **caractérisé en ce que** l'étape de prédémarrage est effectuée pendant une durée totale déterminée et/ou à une vitesse de rotation de prédémarrage prédéterminée de l'arbre d'entraînement.

5. Procédé selon la revendication 4, **caractérisé en ce que** la durée totale prédéterminée de l'étape de prédémarrage et/ou la vitesse de rotation de prédémarrage prédéterminée est/sont fonction de la température du lubrifiant au voisinage du boîtier d'accessoires ou d'un couple résistif exercé par la turbomachine ou de la température extérieure à la turbomachine.

6. Procédé selon l'une quelconque des revendications précédentes, **caractérisé en ce qu'**il comprend une étape de détermination d'une température extérieure dans laquelle lorsqu'un signal indicateur de la température extérieure (Text) de la turbomachine en réponse à une température mesurée est comparé à une valeur de température seuil de sorte que, lorsque la température extérieure mesurée est égale ou inférieure à la valeur de température seuil, le premier signal de démarrage est généré.

7. Procédé selon l'une quelconque des revendications 3 à 6, **caractérisé en ce qu'**il comprend une étape de détermination d'une température de lubrifiant dans laquelle un signal indicateur de température de lubrifiant en réponse à une température de lubrifiant (Tlub) mesurée au voisinage du boitier d'accessoires (19) ou dans celui-ci est comparée à une valeur de température seuil (Tlubseuil) de lubrifiant de sorte que, lorsque la température de lubrifiant (Tlub) mesurée est supérieure à la valeur de température seuil (Tlubseuil) de lubrifiant, le second signal de démarrage est généré pour entraîner l'arbre d'entrainement (18) dans un sens de rotation normal.

8. Procédé selon l'une quelconque des revendications précédentes, **caractérisé en ce qu'**il comprend une étape de détermination d'un couple résistif exercé par la turbomachine, dans laquelle un signal indicateur de couple en réponse au couple résistif mesuré est comparée à une valeur de couple seuil (Cseuil) pour une vitesse de rotation donnée de la turbomachine de sorte que lorsque le couple résistif mesuré est inférieur ou égal à la valeur de couple seuil (Cseuil), le second signal de démarrage est généré.

9. Procédé selon l'une quelconque des revendications précédentes, **caractérisé en ce que** le second signal de démarrage est généré après une durée d'attente prédéterminée qui suit l'achèvement de l'étape de prédémarrage, la vitesse (V0) de l'arbre d'entraînement (18) étant nulle lorsque l'étape de démarrage est enclenchée.

10. Procédé selon l'une quelconque des revendications 4 à 9, **caractérisé en ce que** la vitesse de rotation de prédémarrage est inférieure à celle de la vitesse de rotation (V2) générant le démarrage de la turbomachine.

11. Procédé selon la revendication précédente, **caractérisé en ce que** la vitesse de rotation de prédémarrage maximale de l'arbre d'entraînement (18) atteinte pendant le prédémarrage est comprise entre 100 tours/min et 1000 tours/min.

12. Procédé selon l'une quelconque des revendications précédentes, **caractérisé en ce que** la durée de l'étape de prédémarrage est prédéterminée et comprise entre 10s et 300s.

13. Système de démarrage par temps froid d'une turbomachine (100) où la température extérieure est inférieure à -10°C, voire inférieure à -30°C, le système de démarrage comportant un module de commande électronique (33), un démarreur (20) destiné à être commandé par le module de commande électronique (33) et un arbre d'entraînement (18) de la turbomachine couplé au démarreur (20), le module de commande électronique (33) étant agencé pour générer un premier signal de démarrage destiné à commander la rotation de l'arbre d'entraînement (18) dans un premier sens de rotation et dans un deuxième sens de rotation opposé, de manière alternée et de sorte à générer des oscillations, et pour générer un second signal de démarrage destiné à commander la rotation de l'arbre d'entraînement (18) dans un sens de rotation normal correspondant à l'un des premier et deuxième sens de rotation dans lequel l'arbre d'entraînement (18) est entraîné en rotation jusqu'à une vitesse de rotation (V2) générant le démarrage de la turbomachine.

14. Système de démarrage selon la revendication précédente, **caractérisé en ce que** l'arbre d'entraînement (18) est couplé à un boitier d'accessoires (19) sur lequel est monté le démarreur (20), ce dernier étant apte à actionner l'arbre d'entraînement (18) dans les premier et deuxième sens de rotation opposés de manière alternée.

15. Système de démarrage selon l'une quelconque des revendications 13 et 14, **caractérisé en ce qu'**il comprend un moyen de détection de température relié au module de commande électronique (33) et configuré pour fournir un signal indicateur de température du lubrifiant au voisinage d'un boîtier d'accessoires (19) de la turbomachine.

16. Système de démarrage selon l'une quelconque des revendications 13 à 15, **caractérisé en ce qu'**il comprend des moyens de détermination de couple reliés au module de commande électronique (33) et configurés pour fournir un signal indicateur du couple résistif exercé par la turbomachine.

## Patentansprüche

1. Verfahren zum Kaltwetterstart eines Turbotriebwerks, bei dem die Außentemperatur unter -10°C oder sogar unter -30°C liegt, wobei das Turbotriebwerk ein Startsystem zum Drehantrieb einer Antriebswelle (18) des Turbotriebwerks (100) umfasst, wobei das Verfahren die folgenden Schritte umfasst:
- einen Vorstartschritt, bei dem ein erstes Startsignal erzeugt wird, um die Antriebswelle (18) in einer ersten Drehrichtung um eine Längsachse (X) und in einer zweiten, entgegengesetzten Drehrichtung abwechselnd so zu steuern, dass Schwingungen erzeugt werden, und
- einen Startschritt, bei dem ein zweites Startsignal erzeugt wird, um die Antriebswelle (18) des Turbotriebwerks in eine normale Drehrichtung zu steuern, die einer der ersten und zweiten Drehrichtung entspricht, wobei die Antriebswelle (18) bis zu einer Drehgeschwindigkeit (V2) gedreht wird, die den Start des Turbotriebwerks erzeugt.

2. Verfahren nach dem vorstehenden Anspruch, **dadurch gekennzeichnet, dass** die Antriebswelle (18) die Welle eines Hochdruckkörpers des Turbotriebwerks ist, der Doppelkörper und Doppelstrom aufweist.

3. Verfahren nach einem der vorstehenden Ansprüche, **dadurch gekennzeichnet, dass** die Antriebswelle (18) mit einem Zubehörgehäuse (19) gekoppelt ist, das ein Schmiermittel umfasst, dessen Viskosität bei niedrigen Temperaturen, insbesondere bei einer Temperatur unter -10°C und insbesondere unter -30°C, ansteigt.

4. Verfahren nach einem der vorstehenden Ansprüche, **dadurch gekennzeichnet, dass** der Vorstartschritt während einer bestimmten Gesamtdauer und/oder bei einer vorbestimmten Vorstartdrehgeschwindigkeit der Antriebswelle durchgeführt wird.

5. Verfahren nach Anspruch 4, **dadurch gekennzeichnet, dass** die vorbestimmte Gesamtdauer des Vorstartschritts und/oder die vorbestimmte Vorstartdrehgeschwindigkeit eine Funktion der Schmiermitteltemperatur in der Nähe des Zubehörgehäuses oder eines von dem Turbotriebwerk ausgeübten Widerstandsdrehmoments oder der Temperatur außerhalb des Turbotriebwerks ist/ sind.

6. Verfahren nach einem der vorstehenden Ansprüche, **dadurch gekennzeichnet, dass** es einen Schritt zur Bestimmung einer Außentemperatur umfasst, wobei, wenn ein die Außentemperatur (Text) des Turbotriebwerks als Reaktion auf eine gemessene Temperatur anzeigendes Signal mit einem Temperaturschwellenwert verglichen wird, so dass, wenn die gemessene Außentemperatur gleich oder kleiner als der Temperaturschwellenwert ist, das erste Startsignal erzeugt wird.

7. Verfahren nach einem der Ansprüche 3 bis 6, **dadurch gekennzeichnet, dass** es einen Schritt zur Bestimmung einer Schmiermitteltemperatur umfasst, wobei ein die Schmiermitteltemperatur anzeigendes Signal als Reaktion auf eine in der Nähe des Zubehörgehäuses (19) oder darin gemessene Schmiermitteltemperatur (Tlub) mit einem Schmiermittelschwellentemperaturwert (Tlubseuil) verglichen wird, so dass, wenn die gemessene Schmiermitteltemperatur (Tlub) größer ist als der Schmiermittelschwellentemperaturwert (Tlubseuil), das zweite Startsignal erzeugt wird, um die Antriebswelle (18) in einer normalen Drehrichtung anzutreiben.

8. Verfahren nach einem der vorstehenden Ansprüche, **dadurch gekennzeichnet, dass** es einen Schritt zur Bestimmung eines von dem Turbotriebwerk ausgeübten Widerstandsmoments umfasst, wobei ein das Drehmoment anzeigendes Signal als Reaktion auf das gemessene Widerstandsmoment mit einem Drehmomentschwellenwert (Cseuil) für eine gegebene Drehgeschwindigkeit des Turbotriebwerks verglichen wird, so dass, wenn das gemessene Widerstandsmoment kleiner oder gleich dem Drehmomentschwellenwert (Cseuil) ist, das zweite Startsignal erzeugt wird.

9. Verfahren nach einem der vorstehenden Ansprüche, **dadurch gekennzeichnet, dass** das zweite Startsignal nach einer vorbestimmten Wartezeit erzeugt wird, die auf die Beendigung des Vorstartschritts folgt, wobei die Geschwindigkeit (V0) der Antriebswelle (18) Null ist, wenn der Startschritt eingeleitet wird.

10. Verfahren nach einem der Ansprüche 4 bis 9, **dadurch gekennzeichnet, dass** die Vorstartdrehgeschwindigkeit unter derjenigen der Drehgeschwindigkeit (V2) liegt, die den Start des Turbotriebwerks erzeugt.

11. Verfahren nach dem vorstehenden Anspruch, **dadurch gekennzeichnet, dass** die maximale Vorstartdrehgeschwindigkeit der Antriebswelle (18), die während des Vorstarts erreicht wird, im Bereich zwischen 100 U/min bis 1000 U/min liegt.

12. Verfahren nach einem der vorstehenden Ansprüche, **dadurch gekennzeichnet, dass** die Dauer des Vorstartschritts vorbestimmt ist und im Bereich zwischen 10s und 300s liegt.

13. Kaltwetterstartsystem für ein Turbotriebwerk (100), wobei die Außentemperatur unter -10°C oder sogar unter -30°C liegt, wobei das Startsystem ein elektronisches Steuermodul (33), einen Starter (20), der dazu bestimmt ist, von dem elektronischen Steuermodul (33) gesteuert zu werden, und eine Antriebswelle (18) des Turbotriebwerks, die mit dem Starter (20) gekoppelt ist, umfasst, wobei das elektronische Steuermodul (33) angeordnet ist, um ein erstes Startsignal zu erzeugen, um die Drehung der Antriebswelle (18) in einer ersten Drehrichtung und in einer zweiten, entgegengesetzten Drehrichtung, abwechselnd und so zu steuern, dass Schwingungen erzeugt werden, und um ein zweites Startsignal zu erzeugen, um die Drehung der Antriebswelle (18) in einer normalen Drehrichtung zu steuern, die einer der ersten und der zweiten Drehrichtung entspricht, wobei die Antriebswelle (18) bis zu einer Drehgeschwindigkeit (V2) gedreht wird, die den Start der Turbomaschine erzeugt.

14. Startsystem nach dem vorstehenden Anspruch, **dadurch gekennzeichnet, dass** die Antriebswelle (18) mit einem Zubehörgehäuse (19) gekoppelt ist, auf dem der Starter (20) montiert ist, wobei letzterer in der Lage ist, die Antriebswelle (18) in der ersten und der zweiten entgegengesetzten Drehrichtung abwechselnd zu betätigen.

15. Startsystem nach einem der Ansprüche 13 oder 14, **dadurch gekennzeichnet, dass** es ein Mittel zur Erfassung der Temperatur umfasst, das mit dem elektronischen Steuermodul (33) verbunden und dazu konfiguriert ist, ein Signal zu liefern, das die Temperatur des Schmiermittels in der Nähe eines Zubehörgehäuses (19) des Turbotriebwerks anzeigt.

16. Startsystem nach einem der Ansprüche 13 bis 15, **dadurch gekennzeichnet, dass** es Mittel zur Bestimmung des Drehmoments umfasst, die mit dem elektronischen Steuermodul (33) verbunden und dazu konfiguriert sind, ein Signal zu liefern, das das von dem Turbotriebwerk ausgeübte Widerstandsmoment anzeigt.

## Claims

1. Method for starting a turbine engine in cold weather where the when the outside temperature is typically less than -10°C, even less than -30°C; the turbine engine comprising a starting system intended for rotating a drive shaft (18) of the turbine engine (100), the method comprising the following steps:
- a pre-starting step, wherein a first starting signal is generated to control the drive shaft (18) in a first direction of rotation about a longitudinal axis (X) and in a second opposite direction of rotation in an alternating manner so as to generate oscillations, and
- a starting step, wherein a second starting signal is generated to control the drive shaft (18) of the turbine engine in a normal direction of rotation corresponding to one of the first and second direction of rotation and wherein the drive shaft (18) is rotated until a rotation speed (V2) that causes the turbine engine to start.

2. Method according to the preceding claim, **characterised in that** the drive shaft (18) is the shaft of a high pressure body of the turbine engine which is a two spool and double flow turbine engine.

3. Method according to any one of the preceding claims, **characterised in that** the drive shaft (18) is coupled to an accessory gearbox (19) comprising a lubricant of which the viscosity increases at low temperature, in particular at a temperature less than -10°C and more specifically, less than -30°C.

4. Method according to any one of the preceding claims, **characterised in that** the pre-starting step is carried out for a determined total duration and/or at a predetermined pre-starting rotation speed of the drive shaft.

5. Method according to claim 4, **characterised in that** the predetermined total duration of the pre-starting step and/or the predetermined pre-starting rotation speed is/are according to the temperature of the lubricant in the vicinity of the accessory gearbox or according to a resistive torque exerted by the turbine engine or according to the temperature outside the turbine engine.

6. Method according to any one of the preceding claims, **characterized in that** it comprises a step of determining an outside temperature in which when a signal indicating the external temperature (Text) of the turbomachine in response to a temperature measured is compared to a threshold temperature value so that, when the measured outside temperature is equal to or lower than the threshold temperature value, the first start signal is generated.

7. Method according to any one of claims 3 to 6, **characterised in that** it comprises a step of determining a lubricant temperature, wherein a signal that indicates the lubricant temperature in response to a lubricant temperature (Tlub) measured in the vicinity of the accessory gearbox (19) or in the latter is compared to a lubricant threshold temperature value (Tlubthreshold) such that, when the lubricant temperature (Tlub) measured is greater than the lubricant threshold temperature value (Tlubthreshold), the second starting signal is generated to drive the drive shaft (18) in a normal direction of rotation.

8. Method according to any one of the preceding claims, **characterised in that** it comprises a step of determining a resistive torque exerted by the turbine engine, wherein a signal that indicates the torque in response to the resistive torque measured is compared to a threshold torque value (Cthreshold) for a given rotation speed of the turbine engine such that when the resistive torque measured is less than or equal to the threshold torque value (Cthreshold), the second starting signal is generated.

9. Method according to any one of the preceding claims, **characterised in that** the second starting signal is generated after a predetermined waiting duration that follows the completion of the pre-starting step, the speed (V0) of the drive shaft (18) being zero when the starting step is triggered.

10. Method according to any one of claims 4 to 9, **characterised in that** the pre-starting rotation speed is less than that of the rotation speed (V2) that causes the turbine engine to start.

11. Method according to the preceding claim, **characterised in that** the maximum pre-starting rotation speed of the drive shaft (18) reached during the pre-starting is between 100rpm and 1000rpm.

12. Method according to any one of the preceding claims, **characterised in that** the duration of the pre-starting step is predetermined and between 10s and 300s.

13. System for starting a turbine engine (100) in cold weather where the when the outside temperature is typically less than -10°C, even less than - 30°C, the system comprising an electronic control module (33), a starter (20) intended to be controlled by the electronic control module (33) and a drive shaft (18) of the turbine engine coupled to the starter (20), the electronic control module (33) being arranged to generate a first starting signal intended to control the rotation of the drive shaft (18) in a first direction of rotation and in a second opposite direction of rotation, alternately and so as to generate oscillations, and to generate a second starting signal intended to control the rotation of the drive shaft (18) in a normal direction of rotation corresponding to one of the first and second direction of rotation wherein the drive shaft (18) is rotated until a rotation speed (V2) that causes the turbine engine to start.

14. Starting system according to the preceding claim, **characterised in that** the drive shaft (18) is coupled to an accessory gearbox (19) on which the starter (20) is mounted, the latter being capable of actuating the drive shaft (18) in the first and second opposite directions of rotation, alternately.

15. Starting system according to any one of claims 13 and 14, **characterised in that** it comprises a temperature detecting means for detecting the temperature connected to the electronic control module (33) and configured to supply a signal indicating the temperature of the lubricant in the vicinity of an accessory gearbox (19) of the turbine engine.

16. Starting system according to any one of claims 13 to 15, **characterised in that** it comprises determining means for determining torque connected to the electronic control module (33) and configured to supply a signal indicating the resistive torque exerted by the turbine engine.
